# EUROPEAN PATENT APPLICATION

(11) **EP 1 318 039 A1**
(43) Date of publication of application: **11.06.2003**
(21) Application number: 01204782.5
(22) Date of filing: 05.12.2001
(51) Int. Cl.: B60J 7/02

(54) **Open roof construction for a vehicle**

(71) Applicant: Inalfa Industries B.V., 5804 AB Venray (NL)
(72) Inventor: Manders, Peter Christiaan Leonardus Johannes, 5961 SM Horst (NL)
(74) Representative: Voncken, Bartholomeus Maria Christiaan

(57) **Abstract**

The invention relates to an open roof construction for a vehicle, comprising a frame mounted around a roof opening (2) and a movable closure element (3) connected thereto, wherein said frame at least comprises two guide members (4) for the closure element (3) mounted at opposite sides of the roof opening (2) and extending in the longitudinal direction of the vehicle, and wherein the frame further comprises a transverse beam (5) extending transversally to the longitudinal direction of the vehicle and connecting the guide members (4) while maintaining these at a fixed distance, characterized in that the transverse beam (5) has an adjustable length.

## Description

The invention relates to an open roof construction for a vehicle, comprising a frame mounted around a roof opening and a movable closure element connected thereto, wherein said frame at least comprises two guide members for the closure element mounted at opposite sides of the roof opening and extending in the longitudinal direction of the vehicle, and wherein the frame further comprises a transverse beam extending transversally to the longitudinal direction of the vehicle and connecting the guide members while maintaining these at a fixed distance.

In such an open roof construction the length of the transverse beam defines the spacing of the guide members at their forward ends. For a proper operation of the open roof construction, specifically for the ease of movement of the closure element relative to the frame, it is necessary that the guide members extend exactly in parallel to each other and are correctly positioned in relation tot the moving panel. However, due to variations in the length of the transverse beam the guide members often do not extend in parallel and are not correctly positioned in relation to the moving panel. Thus, opening and closing of the closure element is hampered and when using a closure element driven by a motor, the driving torque of the motor will be increased, and therefore the power consumption.

The variations in the length of the transverse beam basically stem from two causes: firstly, tolerances on different raw material badges and, secondly, production tolerances. The sum of these tolerances mostly is bigger than the tolerance acceptable for the parallelism of the guide members.

It is an object of the present invention to provide an improved open roof construction of the type referred to above.

According to the invention there is provided an open roof construction for a vehicle, comprising a frame mounted around a roof opening and a movable closure element connected thereto, wherein said frame at least comprises two guide members for the closure element mounted at opposite sides of the roof opening and extending in the longitudinal direction of the vehicle, and wherein the frame further comprises a transverse beam extending transversally to the longitudinal direction of the vehicle and connecting the guide members while maintaining these at a fixed distance, characterized in that the transverse beam has an adjustable length.

When mounting the frame around the roof opening of the open roof construction the length of the transverse beam can be adjusted in such a way, that the guide members extend exactly parallel to each other.

According to a preferred embodiment of the open roof construction according to the invention the transverse beam comprises at least two parts connected by a bellows-like section. The bellows-like section allows an easy adjustment of the length of the transverse beam within a limited range. Such a range does not need to be large, because the sum of the tolerances mentioned before mostly does not exceed two millimetres. A bellows-like section then provides an uncomplicated, yet very effective solution for adjusting the length of the transverse beam.

It should be noted, that also other constructive solutions are conceivable. One further example is a transverse beam having telescopingly engaging parts.

When, as mentioned, a bellows-like section is applied, a further preferred embodiment of the open roof construction according to the invention provides a transverse beam comprising a central part and two end parts separated therefrom by means of respective bellows-like sections. When mounting this transverse beam, firstly the central part can be fixed to the roof of the vehicle, and next the two end parts may be positioned in such manner, that each guide member extends exactly in the longitudinal direction of the vehicle, and thus in parallel to the other guide member, while these are maintained at a fixed distance.

It is common practice, that in an open roof construction of the present type the transverse beam comprises an integrated upwardly opening water drain channel. Then, according to the invention, the (each) bellows-like section should be part of that channel, whereas the remainder of the transverse beam adjacent to said bellows-like drain channel section(s) comprises divisions separating adjoining parts of the transverse beam. Or, in other words, the transverse beam is divided into separate adjoining parts, which are only interconnected by bellows-like sections forming part of the water drain channel.

Finally, a preferred embodiment of the open roof construction according to the invention comprises a cover plate covering the transverse beam for dimensionally stabilising the same. When, in accordance with the above, the transverse beam has been mounted for correctly positioning the guide members, the cover plate will be attached to the transverse beam, such that the length thereof is fixed. An example of such a cover plate is a steel plate, which is strong and offers additional structural strength to the open roof construction, even when having a low weight.

Next the invention will be illustrated by means of an illustrative embodiment thereof shown in the figures, in which:
figure 1 shows a perspective explosion view of part of an open roof construction according to the invention, and
figure 2 shows, on a larger scale, detail II in figure 1.

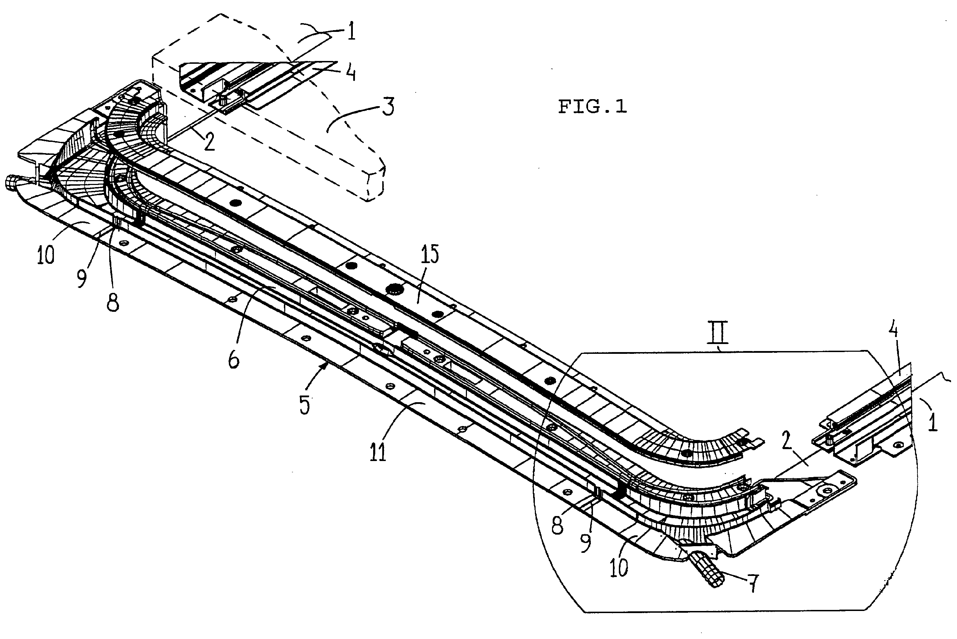

Referring to figure 1, there is shown a roof 1 of a vehicle with a roof opening 2. An open roof construction for said vehicle comprises at least a frame mounted around said roof opening 2. A movable closure element 3 for opening and closing the roof opening 2 is only indicated partially in dotted lines.

The frame comprises at least two guide members 4 for the closure element 3 mounted at opposite sides of the roof opening 2 and extending in the longitudinal direction of the vehicle. Further the frame comprises a front beam 5 extending transversely to the longitudinal direction of the vehicle and connecting the guide members 4 at their forward ends.

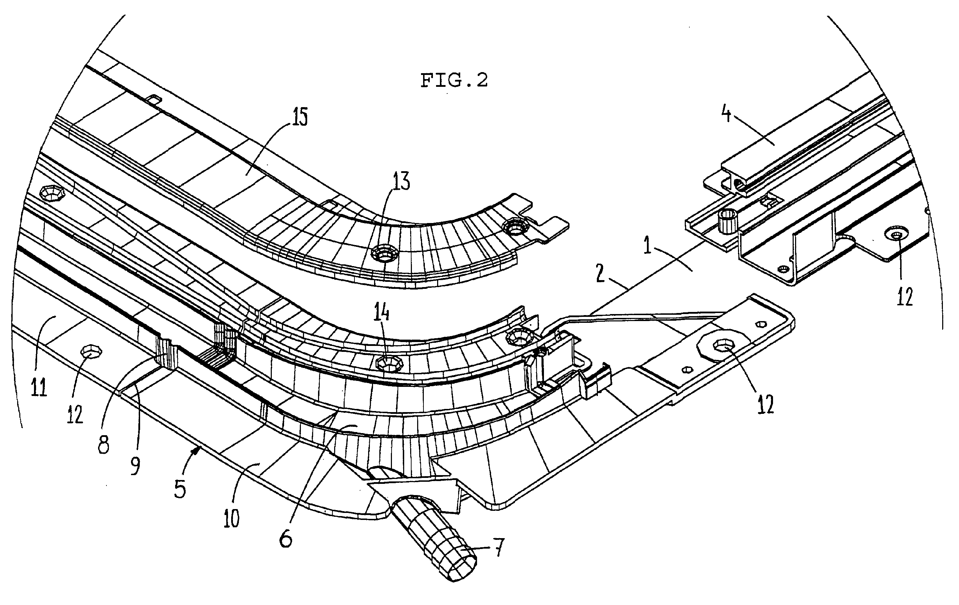

It is noted, that in figure 1 and figure 2 the guide members 4 and front beam 5 are shown in a separated position. In a fully mounted state the guide members 4 and front beam 5 are connected to each other by means of any kind of connecting member not shown in detail.

In the illustrated embodiment the front beam 5 comprises an integrated upwardly opening water drain channel 6. Said water drain channel is intended to collect water dripping from the edges of the closure element 3 when occupying its position for closing the roof opening 2. Drain tubes 7 connect to the drain channel 6 for discharging the water in a manner known per se.

Further, figure 1 shows a cover plate 15 which can be mounted on top of the front beam 5. Its function will be discussed later.

Now reference is made to figure 2, illustrating on a larger scale detail II in figure 1.

As illustrated, the water drain channel 6 comprises a bellows-like section 8, whereas the remainder of the front beam 5 adjacent to said bellows-like drain channel section 8 comprises a division 9 separating adjoining parts of the front beam 5, i.e. an end part 10 and a central part 11.

The end part 10 and central part 11 only being connected through said bellows-like drain channel section 8, an adjustment of the length of the front beam is possible by a deformation of said bellows-like section 8. Thus, the position of the end part 10 may be chosen such, that the corresponding guide member 4 extends exactly in the longitudinal direction of the vehicle (or, more generally, exactly in parallel to the opposite guide member 4).

It is noted, that a corresponding bellows-like section is provided at the opposite end of the front beam 5, figure 1, left top. Thus, in the embodiment illustrated in figures 1 and 2 the front beam 5 comprises one central part 11 and two end parts 10, each separated by a division 9 and connected by a bellows-like section 8.

Once the length of the front beam 5 has been adjusted using the bellows-like sections 8, the cover plate 15, preferably a steel plate, is applied for covering the front beam and maintaining it in the position with adjusted length. Therefore, the cover plate dimensionally stabilises the front beam 5.

Not discussed in detail here are mounting holes 12 in the guide members 4 and front beam 5 to be used when mounting said members to each other and to the roof 1 of the vehicle. Likewise, the cover plate 15 is provided with mounting holes 13 co-operating with corresponding mounting holes 14 of the front beam 5.

The invention is not limited to the embodiment illustrated. The front beam may be provided with alternative means for adjusting its length. As an example telescopingly engaging front beam parts are mentioned. Further, the number of bellows-like sections may differ from two. Also just one bellows-like section or even three or more bellows-like sections may be applied.

Finally it is noted, that according to the present invention the transverse beam can be one kind of beam, such as a front beam, end beam or alike.

## Claims

1. An open roof construction for a vehicle, comprising a frame mounted around a roof opening and a movable closure element connected thereto, wherein said frame at least comprises two guide members for the closure element mounted at opposite sides of the roof opening and extending in the longitudinal direction of the vehicle, and wherein the frame further comprises a transverse beam extending transversally to the longitudinal direction of the vehicle and connecting the guide members while maintaining these at a fixed distance, **characterized in that** the front beam has an adjustable length.

2. An open roof construction according to claim 1, wherein the transverse beam comprises at least two parts connected by a bellows-like section.

3. An open roof construction according to claim 2, wherein the transverse beam comprises a central part and two end parts separated therefrom by means of respective bellows-like sections.

4. An open roof construction according to claim 2 or 3, wherein the transverse beam comprises an integrated upwardly opening water drain channel and the (each) bellows-like section forms part of said channel, whereas the remainder of the transverse beam adjacent to said bellows-like drain channel section(s) comprises divisions separating adjoining parts of the front beam.

5. An open roof construction according to any of the preceeding claims, further comprising a cover plate covering the transverse beam for dimensionally stabilizing the same.

6. An open roof construction according to claim 5, wherein the cover plate comprises a steel plate.
